# EUROPÄISCHE PATENTANMELDUNG

(11) **EP 3 018 353 A1**
(43) Veröffentlichungstag der Anmeldung: **11.05.2016**
(21) Anmeldenummer: 14003706.0
(22) Anmeldetag: 04.11.2014
(51) Int. Cl.: F04D 17/10, F04D 25/06, F04D 29/58, F01D 15/10, F01D 25/12, H02K 9/00

(54) **Verdichter oder Turboexpander mit vom expandierten Prozessfluid gekühlter, elektrischer Maschine (Motor oder Generator)**

(71) Anmelder: FIMA Maschinenbau GmbH, 74423 Obersontheim (DE)
(72) Erfinder: Schmid, Joachim, 74599 Wallhausen (DE)
(74) Vertreter: Hössle Patentanwälte Partnerschaft

(57) **Zusammenfassung**

Strömungsmaschine (10) zum Energieaustausch mit einem die Strömungsmaschine (10) durchfließenden Prozessfluid, mit mindestens einer Energieübertragungseinheit (12) in einem Gehäuse (14), mit einem in einem Motorgehäuse (32) angeordneten Energiewandler (30), der über eine Welle (36) mit der mindestens einen Energieübertragungseinheit (12) verbunden ist, wobei der Energiewandler (30) einen feststehenden Abschnitt (38) und einen mit der Antriebswelle (36) rotierenden Abschnitt (40) umfasst, und mit Mitteln (44) zum Zuführen eines Teils des Prozessfluids in einen Innenraum (48) des Energiewandlers (30) derart, dass eine Durchströmung eines Spalts (42) zwischen dem feststehenden Abschnitt (38) und dem rotierenden Abschnitt (40) durch das Prozessfluid erfolgt. Verfahren zum Kühlen einer Strömungsmaschine (10) mit einem Energiewandler (30), bei dem einem Prozesskreis der Strömungsmaschine (10) Prozessfluid entnommen und einem Spalt (42) zwischen einem feststehenden Abschnitt (38) und einem rotierenden Abschnitt (40) des Energiewandlers (30) zugeführt wird.

## Beschreibung

### Technisches Gebiet

Die vorliegende Erfindung betrifft eine Strömungsmaschine und insbesondere eine Strömungsmaschine zum Energieaustausch mit einem die Strömungsmaschine durchfließenden Prozessfluid.

### Beschreibung des Standes der Technik

Strömungsmaschinen oder auch Turbomaschinen sind bekannt. Sie lassen sich als Arbeitsmaschinen (Verdichter) oder auch als Kraftmaschinen (Turbinen) betreiben. Der Aufbau einer als Verdichter dargestellten Strömungsmaschine ist bspw. in der EP 2 466 144 A1 beschrieben.

Beim Betrieb einer Strömungsmaschine mit sehr hohen Drehzahlen (bspw. 80.000 U/min) bei Leistungen bis zu mehreren 100 kW stellt sich das Problem einer großen Wärmeentwicklung im Antriebsmotor bzw. Generator (Überhitzung der Wicklung nahe am Rotor) und daraus resultierend eine Überhitzung des Rotors. Bei vielen Anwendungen befinden sich Permanentmagnete auf dem Rotor, die aufgrund möglicher Beschädigungen (reversible oder sogar irreversible Verluste der Magnetleistung ab bestimmten Temperaturen) nicht übermäßig erhitzt werden dürfen.

Bei den angesprochenen hohen Drehzahlen (entsprechend hohen Frequenzen und hohen Strömen) entstehen sehr hohe Stromwirbelverluste im Bereich der Welle des Antriebsmotors bzw. Generators. Da sich in diesem ebenfalls Prozessfluid befindet und im Motorinneren ein höherer Druck als Atmosphärendruck herrscht, kann eine Durchströmungskühlung des Motors, wie sie bspw. aus der US 2012/0027567 A1 bekannt ist, nicht eingesetzt werden, da sonst die Reibleistung steigen würde.

### Zusammenfassung der Erfindung

Ausgehend hiervon wird erfindungsgemäß eine Strömungsmaschine mit den Merkmalen des Anspruchs 1 vorgeschlagen.

Die der Erfindung zugrundeliegende Idee besteht darin, einen Teil des Prozessfluids aus dem Prozessfluidkreislauf abzuleiten und derart dem Inneren des Energiewandlers zuzuführen, dass eine (gezielte) Durchströmung eines Spaltes zwischen einem feststehenden Abschnitt (Struktur) und einem mit der Antriebswelle rotierenden Abschnitt (Rotor) durch das Prozessfluid erfolgt. Bei der Zufuhr des Prozessfluids in den Spalt zwischen Stator und Rotor wird der Joule-Thomson-Effekt genutzt, indem durch eine Drosselung des Prozessfluids und anschließende Volumenexpansion eine sehr starke Abkühlung des Prozessfluids vor oder am Spalteintritt erzielt wird. Dem Spalt wird somit Prozessfluid zugeführt, das sehr stark abgekühlt ist und dessen Druck im Wesentlichen dem Druck im Motorinnenraum entspricht. Das Prozessfluid besitzt beim Spalteintritt somit eine sehr hohe Geschwindigkeit (aufgrund der Volumenexpansion) und eine sehr niedrige Temperatur (aufgrund der isenthalpen Druckminderung des Joule-Thomson-Effekts).

Zur Ausnutzung des beschriebenen Effekts wird das Prozessfluid an einer Stelle möglichst hohen Drucks aus dem Prozessfluidkreislauf entnommen. Im Falle von Turbinen wäre dies bspw. eine Stelle stromaufwärts vor dem Eintritt des Prozessfluids in die Turbine, bei Verdichtern bspw. eine Stelle stromabwärts nach dem Austritt des Prozessfluids aus dem Verdichter.

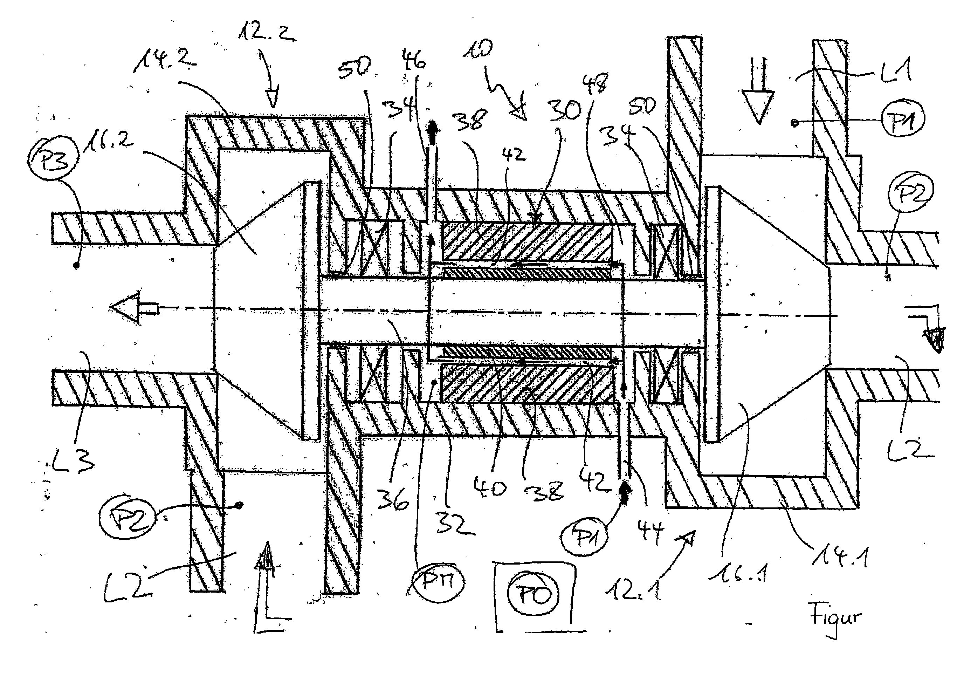

Weitere Vorteile und Ausgestaltungen ergeben sich aus der Beschreibung und der beiliegenden Zeichnung.

Es versteht sich, dass die voranstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand eines Ausführungsbeispieles in der Zeichnung schematisch dargestellt und wird im folgenden unter Bezugnahme auf die Zeichnung ausführlich beschrieben.

### Kurzbeschreibung der Zeichnung

Die einzige Figur zeigt in schematischer geschnittener Blockdarstellung eine erfindungsgemäße Strömungsmaschine am Beispiel einer Turbine.

### Ausführliche Beschreibung der Zeichnung

Die Erfindung ist anhand eines Ausführungsbeispiels in der Figur schematisch dargestellt. Hierzu zeigt die Figur in schematischer geschnittener Blockdarstellung eine Turbine 10 zum Energieaustausch mit einem die Turbine 10 durchfließenden Prozessfluid, im folgenden als Prozessgas bezeichnet. Die Erfindung erstreckt sich selbstverständlich auch auf andere als die dargestellte Ausführungsform und deckt auch andere Strömungsmaschinen mit abweichendem Aufbau, insbesondere auch Verdichter ab.

Die dargestellte Turbine 10 umfasst eine erste Energieübertragungseinheit 12.1 (in der Darstellung in der Figur im rechten Bereich der Turbine) und eine zweite Energieübertragungseinheit 12.2. Die Energieübertragungseinheiten 12.1, 12.2 können bspw. durch in Gehäuse 14.1, 14.2 angeordnete Laufräder 16.1, 16.2 gebildet sein. Andere Ausgestaltungen sind möglich und dem Fachmann bekannt. Insbesondere umfasst die Erfindung selbstverständlich auch Ausgestaltungen mit nur einer Energieübertragungseinheit (Turbineneinheit bzw. Verdichtereinheit).

Die beiden Energieübertragungseinheiten 12.1, 12.2 sind derart angeordnet, dass zwischen ihnen ein in einem hermetisch oder halbhermetisch gasdichten Generatorgehäuse 32 angeordneter Generator 30 zu liegen kommt (im Falle eines Verdichters wäre dies der Antriebsmotor). Der Generator 30 verfügt über eine Welle 36, die mittels Lager 34 drehgelagert ist. Der Generator ist von im Wesentlichen bekannter Bauweise und aus diesem Grunde lediglich stark schematisch dargestellt. Die Lager 34 sind bspw. radiale Magnetlager.

Ein erstes Ende der Welle 36 (in der Darstellung der Figur rechts liegend) ist antriebsfest mit dem Laufrad 16.1 der ersten Energieübertragungseinheit 12.1 verbunden, und ein gegenüberliegendes zweites Ende der Welle 36 ist antriebsfest mit dem Laufrad 16.2 der zweiten Energieübertragungseinheit 12.2 verbunden.

Die beiden Energieübertragungseinheiten 12.1, 12.2 sind miteinander in Reihe geschaltet. Über eine Zufuhr- bzw. Speiseleitung L1 wird zunächst unter hohem Druck stehendes Prozessgas der ersten Energieübertragungseinheit 12.1 zugeführt, deren Laufrad 16.1 durch das Prozessgas angetrieben wird. Anschließend wird das Prozessgas über eine Verbindungsleitung L2 (in der Figur nicht durchgängig dargestellt) dem Laufrad 16.2 der zweiten Energieübertragungseinheit 12.1 zugeführt, um im Abschluss über eine Leitung L3 abgeführt zu werden.

Im Bereich des Übertritts zwischen dem Generatorgehäuse 32 und den Gehäusen 14.1, 14.2 der beiden Energieübertragungseinheiten 12.1, 12.2 kann jeweils eine Gasbarriere 50 vorgesehen sein, um Gasquerströme zwischen den beiden Energieübertragungsstufen 12.1, 12.2 zu verhindern. Dabei kann es sich bspw. um sogenannte gasdynamische Barrieren handeln, wie sie ausführlich in der EP 2 466 144 A1 beschrieben sind.

Erfindungsgemäß umfasst die Turbine 10 des Weiteren Mittel zum Zuführen eines Teils des Prozessgases in das Innere des Generators 30. Hierfür ist eine Kühlzufuhrleitung 44 vorgesehen, die unter hohem Druck stehendes Prozessgas in einen Innenraum 48 des Generators 30 leitet. Das Prozessgas in der Kühlzufuhrleitung 44 wird einer Stelle hohen Drucks aus dem Prozessgaskreis entnommen, bspw. vor Eintritt des Prozessgases in die erste Energieübertragungseinheit 12.1. Diese Stelle ist in der Figur mit dem Bezugszeichen P1 gekennzeichnet.

Die Mittel zum Zuführen eines Teils des Prozessgases umfassen erfindungsgemäß des Weiteren ein (nicht näher dargestelltes) Gasführungselement (wie bspw. eine Drosselung, eine Blende o.dgl.) kurz vor Eintritt des Prozessgases in den Spalt 42 zwischen Stator 38 und Rotor 40, um eine Entspannung des Prozessgases und damit verbunden eine starke Abkühlung zu erzielen. Das diesem Vorgehen zugrundeliegende Konzept ist als Joule-Thomson-Effekt bekannt: Wird strömendes Gas gedrosselt, etwa durch eine Blende oder ein anderes Hindernis in einer Rohrleitung, dann expandiert das Gas, d.h. das von dem Gas eingenommene Volumen hinter dem Hindernis nimmt zu. Dabei erhöht sich der mittlere Teilchenabstand, wodurch sich die Temperatur des Gases stark abkühlt. Das stark abgekühlte Gas besitzt dann den Druck PM des Generatorinnenraums 48, außerdem eine sehr hohe Geschwindigkeit und eine sehr niedrige Temperatur.

Da das Prozessgas nun erfindungsgemäß beim Eintritt in den Spalt 42 den Druck PM des Generatorinnenraums besitzt, bleiben die Gasreibungsverluste gering. Darüber hinaus führt die hohe Geschwindigkeit längs zu dem Spalt 42 dazu, dass sich das Prozessgas in Form einer Wendel um den Rotor 40 mit hoher Geschwindigkeit bewegt und nicht als umlaufende Walze in dem Spalt von Welle und Wicklung verbleibt.

An dem gegenüberliegenden Ende des Spalts, d.h. an dem Spaltaustritt, wird das Prozessgas eingefangen und über eine Kühlabführleitung 46 nach außen transportiert und wieder dem Prozess zugeführt (bspw. an einer Stelle mit möglichst niedrigem Druck, wie nach dem Austritt aus der ersten Energieübertragungseinheit 12.1 in der Leitung L3 P3) .

Grundsätzlich gilt für die Druckverhältnisse: PM > P0 (P0: Umgebungsdruck ca. 1 bar), P1 > P2 > PM >= P3.

Selbstverständlich kann der Fachmann bei zwei- oder mehrstufigen Strömungsmaschinen andere Konstellationen zur Entnahme und Rückführung von Prozessgas ersinnen.

Im Falle eines Verdichters kehrt sich das Strömungsprinzip um, und der Energiewandler ist dann ein Antriebsmotor, wie dem Fachmann wohl bekannt ist.

Die Erfindung ermöglicht eine äußerst effiziente Kühlung von hochdrehenden Strömungsmaschinen, und dies insbesondere an einer Stelle, an der bislang keine effektive Kühlung möglich war. Darüber hinaus wird mit der erfindungsgemäßen Zufuhr von Prozessgas in den Spalt zwischen Rotor und Stator des Energiewandlers erreicht, dass die sich aus dem im Innenraum des Wandlers befindlichen Gas bildende stehende Gaswalze längs des Rotors abgebaut wird. Mit dem erfindungsgemäßen Vorgehen können hohe Temperaturdifferenzen um 100 K zwischen Prozessgas und Rotortemperatur dargestellt werden, die eine Abfuhr von mehreren Kilowatt Wärmeleistung selbst mit kleinen Masseströmen (und somit nur geringer zusätzlicher Reibleistung) gestattet.

## Patentansprüche

1. Strömungsmaschine (10) zum Energieaustausch mit einem die Strömungsmaschine (10) durchfließenden Prozessfluid, mit
mindestens einer Energieübertragungseinheit (12) in einem Gehäuse (14),
einem in einem Motorgehäuse (32) angeordneten Energiewandler (30), der über eine Welle (36) mit der mindestens einen Energieübertragungseinheit (12) verbunden ist, wobei der Energiewandler (30) einen feststehenden Abschnitt (38) und einen mit der Antriebswelle (36) rotierenden Abschnitt (40) umfasst, und
Mitteln (44) zum Zuführen eines Teils des Prozessfluids in einen Innenraum (48) des Energiewandlers (30) derart, dass eine Durchströmung eines Spalts (42) zwischen dem feststehenden Abschnitt (38) und dem rotierenden Abschnitt (40) durch das Prozessfluid erfolgt.

2. Strömungsmaschine (10) nach Anspruch 1, die ein Verdichter ist und bei der die mindestens eine Energieübertragungseinheit (12) eine Verdichtereinheit und der Energiewandler (30) ein Antriebsmotor sind.

3. Strömungsmaschine (10) nach Anspruch 1, die eine Turbine ist und bei der die mindestens eine Energieübertragungseinheit (12) eine Turbineneinheit und der Energiewandler (30) ein Generator sind.

4. Strömungsmaschine (10) nach einem der Ansprüche 1 bis 3, bei der die Mittel (44) zum Zuführen eines Teils des Prozessfluids ein Gasführungselement umfassen, das vor dem Eintritt des Prozessfluids in den Spalt (42) eine Expansion des zugeführten Prozessfluids bewirkt.

5. Strömungsmaschine (10) nach einem der Ansprüche 1 bis 4, bei der das dem Spalt (42) zugeführte Prozessfluid einer Stelle hohen Drucks (P1) aus dem Prozesskreis entnommen ist.

6. Strömungsmaschine (10) nach einem der Ansprüche 1 bis 5, bei der das dem Spalt (42) zugeführte Prozessfluid vor dem Eintritt in den Spalt auf einen in dem Innenraum (48) des Energiewandlers (30) herrschenden Druck (PM) expandiert und stark abgekühlt ist.

7. Strömungsmaschine (10) nach einem der Ansprüche 1 bis 6, bei der das Prozessfluid dem Spalt (42) mit hoher Geschwindigkeit zugeführt wird.

8. Verfahren zum Kühlen einer Strömungsmaschine (10) mit einem Energiewandler (30), bei dem einem Prozesskreis der Strömungsmaschine (10) Prozessfluid entnommen und einem Spalt (42) zwischen einem feststehenden Abschnitt (38) und einem rotierenden Abschnitt (40) des Energiewandlers (30) zugeführt wird.

9. Verfahren nach Anspruch 8, bei dem das Prozessfluid dem Prozesskreis mit hohem Druck (P1) entnommen wird.

10. Verfahren nach Anspruch 8 oder 9, bei dem das Prozessfluid vor dem Eintritt in den Spalt (42) durch Expansion abgekühlt und beschleunigt wird.

11. Verfahren nach einem der Ansprüche 8 bis 10, bei dem das Prozessfluid vor dem Eintritt in den Spalt (42) auf einen Druck (PM) im Inneren des Energiewandlers (30) gebracht wird.

## Geänderte Patentansprüche

### Geänderte Patentansprüche gemäss Regel 137(2) EPÜ.

1. Strömungsmaschine (10) zum Energieaustausch mit einem die Strömungsmaschine (10) durchfließenden Prozessfluid, mit
mindestens einer Energieübertragungseinheit (12) in einem Gehäuse (14),
einem in einem Motorgehäuse (32) angeordneten Energiewandler (30), der über eine Welle (36) mit der mindestens einen Energieübertragungseinheit (12) verbunden ist, wobei der Energiewandler (30) einen feststehenden Abschnitt (38) und einen mit der Antriebswelle (36) rotierenden Abschnitt (40) umfasst, und
Mitteln (44) zum Zuführen eines Teils des Prozessfluids in einen Innenraum (48) des Energiewandlers (30) derart, dass eine Durchströmung eines Spalts (42) zwischen dem feststehenden Abschnitt (38) und dem rotierenden Abschnitt (40) durch das Prozessfluid erfolgt,
wobei die Mittel (44) zum Zuführen eines Teils des Prozessfluids ein Gasführungselement umfassen, das kurz vor dem Eintritt des Prozessfluids in den Spalt (42) eine Expansion des zugeführten Prozessfluids bewirkt, derart dass eine Expansion des einer Stelle hohen Drucks (P1) aus dem Prozesskreis entnommenen Prozessfluids vor dem Eintritt in den Spalt auf einen in dem Innenraum (48) des Energiewandlers (30) herrschenden Druck (PM) erfolgt und das Prozessfluid stark abgekühlt und mit hoher Geschwindigkeit in den Spalt (42) eintritt.

2. Strömungsmaschine (10) nach Anspruch 1, die ein Verdichter ist und bei der die mindestens eine Energieübertragungseinheit (12) eine Verdichtereinheit und der Energiewandler (30) ein Antriebsmotor sind.

3. Strömungsmaschine (10) nach Anspruch 1, die eine Turbine ist und bei der die mindestens eine Energieübertragungseinheit (12) eine Turbineneinheit und der Energiewandler (30) ein Generator sind.

4. Verfahren zum Kühlen einer Strömungsmaschine (10) mit einem Energiewandler (30), bei dem einem Prozesskreis der Strömungsmaschine (10) Prozessfluid entnommen und einem Spalt (42) zwischen einem feststehenden Abschnitt (38) und einem rotierenden Abschnitt (40) des Energiewandlers (30) zugeführt wird,
wobei das Prozessfluid dem Prozesskreis mit hohem Druck (P1) entnommen und vor dem Eintritt in den Spalt (42) auf einen Druck (PM) im Inneren des Energiewandlers (30) gebracht wird und kurz vor dem Eintritt in den Spalt (42) durch Expansion abgekühlt und beschleunigt wird.
